# EUROPEAN PATENT SPECIFICATION

(11) **EP 3 429 710 B1**
(45) Date of publication and mention of the grant of the patent: **02.12.2026**
(21) Application number: 17714101.7
(22) Date of filing: 15.03.2017
(51) Int. Cl.: A63F 13/46, A63F 13/798

(54) **ACROSS-MATCH ANALYTICS IN PEER-TO-PEER GAMING TOURNAMENTS**
ACROSS-MATCH-ANALYTIK IN PEER-TO-PEER-SPIELETURNIEREN
ANALYTIQUE DE CONFRONTATION DANS DES TOURNOIS DE JEU DE POSTE À POSTE

(30) Priority: 15.03.2016 US 201662308823 P; 16.03.2016 US 201662309390 P
(43) Date of publication of application: 23.01.2019
(73) Proprietor: Skillz Platform Inc., San Francisco CA 94104 (US)
(72) Inventor: PARADISE, Andrew, San Francisco, CA 94103 (US)
(74) Representative: Schmidt, Steffen J.
(86) International application number: PCT/US2017/022423
(87) International publication number: WO 2017/160917

(56) References cited:
- US-A1- 2007 191 101
- US-A1- 2015 202 529

## Description

### CROSS REFERENCE TO RELATED APPLICATIONS

### TECHNICAL FIELD

The subject matter described herein relates to a method for comparing game states and player performance across disparate game matches, a corresponding computer program product, and a corresponding system.

### BACKGROUND

Multiplayer online synchronous digital video games in which multiple players participate in the same match allow for direct comparison between player performances in the match because each player shares the same game state. For example, in a digital tennis match, each player interacts with a shared game state (and each other). Such multiplayer synchronous games also allow for automatic game analysis beyond each player's performance, such as the number of times a particular event occurs or identifying which player has the greatest change in score over a given time period because a single game state can be directly analyzed and each player's performance is referenced to the single and common game state.

In contrast, some peer-to-peer video game tournaments provide competitions in which players compete in separate game matches (possibly at the same or different times) but their performance is compared across matches to determine tournament outcome. For example, two players may each play a single player game *(e.g.,* a stage of Tetris) and their final score can be compared to determine a winner.

Further prior art can be found in US 2015/202529 A1 which generally relates to an online software video capture and replay system and in US 2007/191101 A1 which generally relates to quickly providing good matchups.

### SUMMARY

The invention is set out in the independent claims. Preferred embodiments of the invention are set out in the dependent claims.

According to a first aspect, we describe a method comprising: receiving first game state data captured from a first gaming application executing on a first client and characterizing an in-game parameter of a first match of a peer-to-peer digital gaming tournament, the first game state data captured by a first peer-tournament module integrated into the first gaming application and in operable communication with an across-match analytics server configured to implement the peer-to-peer digital gaming tournament over a network; receiving a first video capture from the first client of a display of the first match; receiving second game state data captured from a second gaming application executing on a second client and characterizing an in-game parameter of a second match of the peer-to-peer digital gaming tournament, the second game state data captured by a second peer-tournament module integrated into the second gaming application and in operable communication with the across-match analytics server; receiving a second video capture from the second client of a display of the second match; comparing the first game state data and the second game state data using a predefined comparison rule by computing a measure of a performance of a first player in the first match and a measure of a performance of a second player in the second match; selecting, based on the comparison, a portion of the first video capture or a portion of the second video capture; and streaming at least one of the portion of the first video capture or the portion of the second video capture to at least one viewing client; wherein the receiving, comparing, and providing is performed by at least one data processor forming part of at least one computing system, wherein at least the first game state data or the second game state data comprises one or more snapshots of game state data relating to a specific game instance relating to a discrete time block during the course of game play.

One or more of the following features can optionally be included in any feasible combination. The predefined comparison rule can define the measure of the performance of the first player and the measure of the performance of the second player. A first video capture can be received from the first dient of a display of the first match. A second video capture can be received from the second dient of a display of the second match. A portion of the first video capture or a portion of the second video capture can be selected based on the comparison. At least one of the portion of the first video capture and the portion of the second video capture can be streamed to at least one viewing dient.

The first game state data and the second game state data can be compared periodically and at multiple time points. The first match and the second match can begin at different times. The first game state data can be registered in time to the second game state data. Time can be referenced to a game time, an absolute time, or a tournament time. The first game state data can characterize a value of one or more in-game data objects at two or more points of time during the first match. The first dient can receive game data from a third party game Server. The game data can be for implementing the first match.

The first match and the second match can be separate instances of the digital video game. The digital video game can be an asynchronous game. The digital video game can be a single player asynchronous game. The first match and the second match can be played concurrently. The predefined comparison rule can be previously defined by a user. The comparing can include identifying at least one period of time during the first match or the second match in which an event occurs.

The receiving of the first game state data can occur during the first match. The receiving of the first game state data can occur periodically during the first match. The first game state data can include: instantaneous score, change in score over a predefined period of time, character position, and/or character health.

The first match and the second match can be initiated with a common random number seed to provide common starting conditions. The first dient and the second dient can include separate computing Systems in communication with a third party game Server and an analytics Server via a network, the third party game Server separate from the analytics Server. At least one of the receiving, comparing, and providing can be performed by the analytics Server.

According to a second aspect, we describe a non-transitory computer program product comprising a non-transitory machine-readable medium storing instructions that, when executed by one or more programmable processors, cause the one or more programmable processors to perform operations as described according to the first aspect. According to a third aspect, we describe a system comprising a machine-readable medium storing instructions and one or more programmable processors configured to perform operations as described. Such computer systems may include one or more data processors and memory coupled to the one or more data processors. The memory may temporarily or permanently store instructions that cause at least one processor to perform one or more of the operations described herein. In addition, methods can be implemented by one or more data processors either within a single computing System or distributed among two or more computing Systems. Such computing Systems can be connected and can exchange data and/or commands or other instructions or the like via one or more Connections, including but not limited to a connection over a network (e.g. the Internet, a wireless wide area network, a local area network, a wide area network, a wired network, or the like), via a direct connection between one or more of the multiple computing Systems, etc.

The details of one or more variations of the subject matter described herein are set forth in the accompanying drawings and the description below. Other features and advantages of the subject matter described herein will be apparent from the description and drawings, and from the Claims.

### DESCRIPTION OF DRAWINGS

FIG. 1 is a process flow diagram illustrating a process of comparing disparate game state data from multiple matches in an online peer-to-peer digital gaming tournament;
FIG. 2 is a System block diagram illustrating a System for implementing a peer-to-peer digital gaming tournament;
FIG. 3 is a System block diagram of a System with an example eSports Management System utilizing cross-match analytics to provide automatic recommendations for which portions of video to stream of an online eSports tournament;
FIG. 4 is an example interface illustrating example content shared by a tournament commentator;
FIG. 5 is a user interface illustrating an example video control panel;
FIG. 6 is an Illustration of an example unified leaderboard;
FIG. 7 is a process flow diagram illustrating a process of defending, challenging, and viewing the leaderboard; and
FIG. 8 is an illustrating of an example leaderboard prize page.

Like reference Symbols in the various drawings indicate like elements.

### DETAILED DESCRIPTION

While a final match score is comparable once both matches are complete, it may be challenging to automatically make meaningful comparisons between matches during gameplay because the players have separate and independent game States that are not in a format that can be easily and directly compared. Similarly, automatic game analysis of aspects beyond each player's performance, such as the number of times a particular event occurs or identifying which player has the greatest change in score over a given time period, is also challenging because the players have separate and independent game States that are not in a format that can be easily and directly compared.

The current subject matter relates to comparing otherwise unjoinable sets of data, for example, to enable comparing game States and player performance across disparate game matches. While multiplayer synchronous games allow for comparison between player performance when the players participate in a common match (e.g., the same match or game instance), the current subject matter enables comparison and analytics across multiple disparate matches, such as multiple single player matches. The current subject matter enables across-match analytics in peer-to-peer digital video game tournaments using video games that do not easily allow for across-match comparison. In some implementations, the comparison can be performed by capturing game data from each dient rather than requiring access to a third party game Server, for example a third party game Server that creates and/or Controls the game state data.

The across-match analytics can be used, in an example Implementation, in an eSports stream management System for automatically suggesting or recommending portions of video streams to broadcast in real time and during a live peer-to-peer digital videogame tournament.

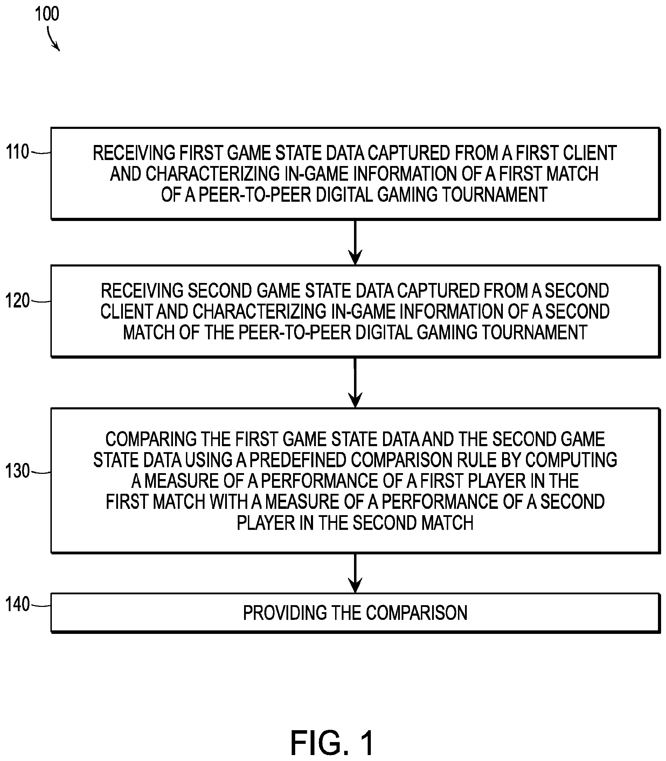

FIG. 1 is a process flow diagram illustrating a process 100 of comparing disparate game state data from multiple matches in an online peer-to-peer digital gaming tournament. The peer-to-peer digital gaming tournament may be an online tournament in which players compete across separate game matches (also referred to as game instances) so that not all tournament participants share the same game state. The players may participate in the tournament by executing a local application of an online video game on their clients, which can exchange game data with a third party game Server in order to implement the gaming experience. For example, in an online video game, the third party game Server (which can be a game developer Server or other Server that Supports game play but that is separate from one or more Servers implementing a eSports stream management System consistent with implementations of the current subject matter) can provide data about game state features (e.g., key objectives or milestones that a player or players must reach or overcome), scoring approaches, other game characteristics, game state data, and the like. Such data can come directly from a dient machine on which a user is playing a game, or it can be provided from the third party Server interacting with the dient to administer the game being played by the user on the dient machine.

At 110, game state data is received from a first dient. The game state data can be captured at the first dient rather than, for example, received from a third party game Server when the associated video game is an online game. The game state data can include in-game information of a match in the peer-to-peer digital gaming tournament. The game state data can relate to the particular type of game being played and can include any game-specific parameter or metric. For example, game state data can include instantaneous score, change in score over a predefined period of time, character position, character health, objectives reached/overcome, bonuses gained, extra powers or equipment gained or used, and the like. The game state data can include one or more data objects used by and internal to the video game for execution of the match. Game state data includes state data for the game during match play (e.g., in the middle of a match) rather than only a final state of the match (e.g., a final score) and can include data for two or more points in time. In some implementations, the game data can be received during the match (e.g., before the match ends) and may be received periodically (e.g., multiple times during the match, every second, 10 seconds, minute, and the like).

At 120, game state data from a second dient can be received. This second game state data can be from a second match, different and separate from the first match described with respect to Step 110. The second match can be part of the peer-to-peer digital game tournament. The second game state data can include in-game Information of the second match.

At 130, the first game state data and the second game state data can be compared. The comparison can be performed using a predefined comparison rule, which can be pre-defined, for example, by a user or tournament host who defines a custom comparison metric. The comparison can include computing a measure of performance of a player in the first match and a player in the second match. For example, in an Implementation in which the first and second matches are played substantially concurrently, the measure of performance can include a score for a given interval of time during the middle of game play. The measure of performance can include identifying an event. For example, an in-game achievement such as a "head shot" (seen in some first-person shooters) can be a measure of performance. In some implementations a time period during the match in which the event occurs can also be identified. In some implementations, the predefined comparison rule defines the measures of performance of the players.

The comparison can be performed at multiple points in time, for example, periodically such as when and if new game state data is received.

At 140, the comparison can be provided. The providing can include, for example, sending the comparison or a characterization of the relative performance of the players to other tournament participants. As described more fully below, the comparison can be used in an eSports stream management System to automatically recommend portions of video to broadcast or include in a highlights reel. In some implementations, the peer-to-peer tournament can be a peer wagering competition in which peers receive funds based on the outcome of the tournament and the comparison can be provided to a fund escrow Server for determining and managing tournament payouts. For example, the participant having the most number of rows cleared in the first two minutes of Tetris play (as determined by an implementation of the current subject matter) can be receive a payout.

In some implementations, the game state data can be registered in time so that both the first and second game state data references to a common time. For example, if a first match begins play at 12:00 while a second match begins play at 12:06, a comparison between matches at 12:07 may provide some comparison but a user or tournament host may wish to compare the first match at 12:01 to the second match at 12:07 (e.g., when both matches have had 1 minute of gameplay) to provide a rnore direct comparison. As part of a meaningful comparison, several different common time references can be used. The common time references can include a game time (e.g., measured front the start of game play), a tournament time (e.g., measured from the start of a tournament), an absolute time (e.g., measured to a common clock, such as Coordinated Universal Time (UTC)), and the like.

In some implementations, the across-match comparison can be used in an eSports stream management System to automatically recommend portions of video to broadcast or include in a highlights reel. The cross-match comparison can provide automatic detection of portions of video or players in the game in which interesting or relevant or entertaining play occurs. In an eSports Streaming management System, a first video capture of the first match and from the first client can be received. The video capture can be performed at the client, for example, by capturing user interface screen shots at a predetermine rate, capturing open graphics library (openGL) layers; and capturing data through a pixel buffer and forming video data from the captured data. The eSports streamlining management System can receive a second video capture from the second client of the second match. A portion of the first video capture and/or a portion of the second video capture can be selected using the comparison. By using the across-match comparison, the eSports Management System can identify portions of gameplay that may be interesting to a viewer. For example, at any given point during two matches, viewers may be interested in seeing the greatest "play", which may be identified as the greatest change in score. The selected portion of video capture can be streamed to one or more viewing clients.

In some implementations, a user or tournament host can specify or define the predefined comparison rule. This allows for customization of the comparison process.

In some implementations, the matches may be initiated with a common random number generator seed to cause the starting conditions of each match to be identical. Use of a common random number generator seed can impose fairness in games having elements of randomness in that random elements will start in the same condition. By starting games in the same conditions, a player's performance is less dependent on the random number generator (or conversely, two players will have a level playing field). Using a common random number generator seed further allows for better comparison of game state data and performance between otherwise separate game matches.

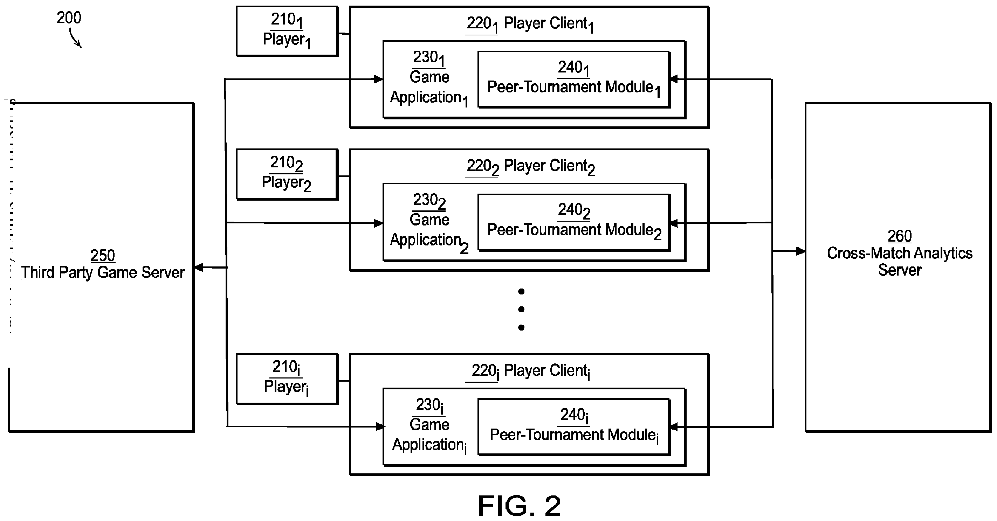

FIG. 2 is a System block diagram illustrating a System 200 for implementing a peer-to-peer digital gaming toumament. The System 200 includes an across-match analytics Server 260 that enables comparing disparate game state data from multiple matches.

A plurality of players 210ⱼ (*i=I, 2, ...* , *N*) operate respective player clients 220ⱼ. Each player dient 220ⱼ, includes a third party game application 230ⱼ. The game application 230ⱼ, can be any online digital game *(e.g.,* video game). In some implementations, multiple players 210, can compete against one another online. Games can be consistent across game applications 230, (*e.g.,* if the players 210, are playing chess, each game application 230, is an instance of an electronic chess game). Each game application 230, can be in communication with and receiving game data from a third party game Server 250. The game Server 250 provides game data necessary to operate the game. Clients 210, may include mobile devices (*e*.*g*., Smartphones, tablets, and the like) and the clients 210, third party game Server 250, and across-match analytics Server 260 can implement the tournament over a network, such as the internet.

Each game application 230, includes a peer-tournament module 240ⱼ. Peer-tournament module 240, integrates into game application 230, and enables players 210, to enroll and participate in an online game competition. Peer-tournament module 240, communicates with and works in tandem with the across-match analytics Server 260. While a game application 230, is running a match (*e.g.,* a game instance), the game application 230, has an internal game state that changes over time as the associated player 210, interacts with (*e.g.,* plays) the game. Peer-tournament module 240, can capture the game state data periodically, and/or continuously and transmit the captured game state to the across-match analytics Server 260. The across-match analytics Server 260 can receive the game state from multiple peer-tournament modules 240, and, as described above with reference to FIG. 1, compare the game States across matches. The matches may be separate in that they do not share a game state. For example, each game application 230, can be an asynchronous single player game.

In some implementations, the peer-tournament module 240, and the across-match analytics Server 260 does not provide game data to the game application 230ⱼ. In other words, in some implementations, they do not contribute to implementing a game instance but rather observe the game, capture game state, and enable a separate layer of multi-match tournament functionality.

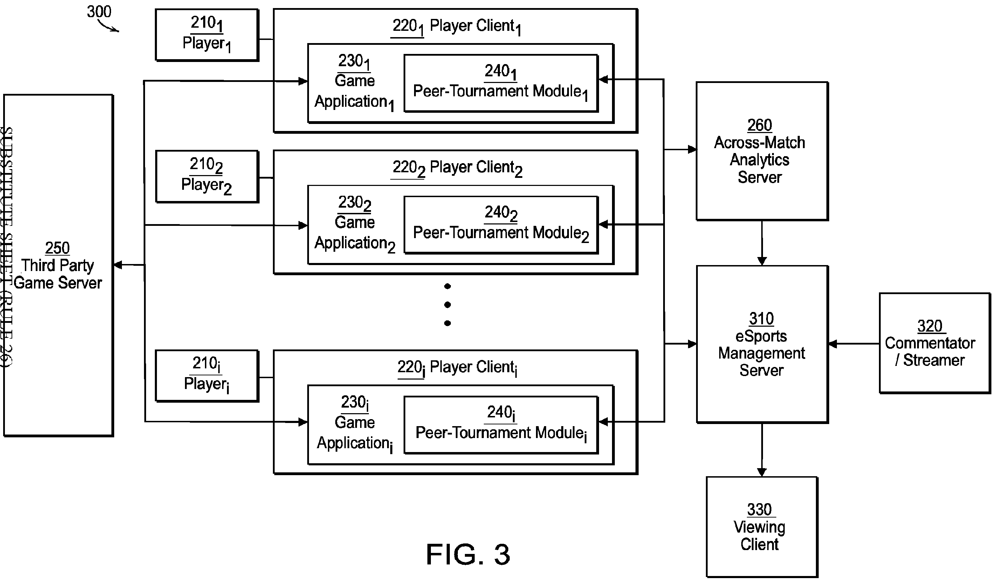

FIG. 3 is a System block diagram of a System 300 with an example eSports Management System 310 utilizing cross-match analytics to provide automatic recommendations for which portions of video to stream of an online eSports tournament. The example System 300 includes the components as described above with reference to FIG. 2 and further includes an eSports management Server 310. ESports management Server 310 interfaces with a tournament commentator 320, which can be the tournament host, participant, or third party (also referred to as a Streamer 320). ESports management Server 310 can provide an automated virtual broadcast Studio for tournament commentator 320 to cover an eSports tournament. eSports management Server 310 receives the cross-match comparison from the across-match analytics Server 260 and can automatically break down video into highlight reels and key segments, provide the game analytics to viewing clients 330 and/or players 210, and assemble a suggested broadcast for the tournament commentator 320. eSports management Server 310 can broadcast a live video feed (as controlled by tournament commentator 320) to players 210, and/or viewing clients 330.

In general, video game Streamers can engage with their audience by showing live footage of their own gameplay. But in an eSports tournament, mere Streaming of a display does not convey what is happening to other players in separate parts of a game or eSports competition. As eSports grow in popularity, the eSports management Server 310 solves a need for a toolkit that allows Streamers, as individuals, to perform the same level of commentary and gameplay analytics that is performed by analyst teams in the parallel industry of physical sports.

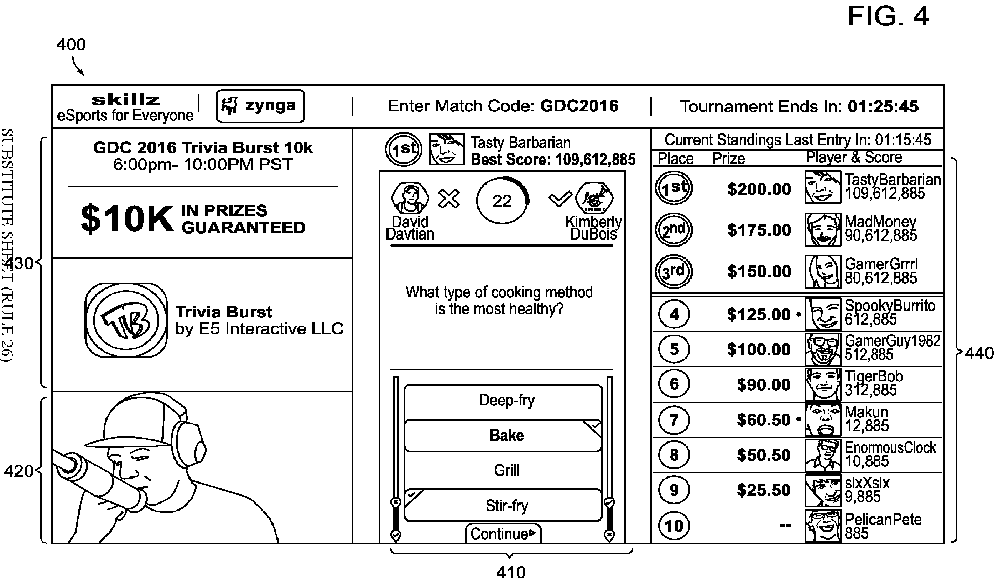

ESports management Server 310 provides an automated broadcast Studio for a Streamer 320 to cover (*e*.*g*., comment on) an eSports tournament in any game. The eSports Streaming Management System has two types of end users. The first is the stream viewer 330. The viewer 330 does not have exposure to stream tools that are available as part of the eSports management Server 310. Instead, the viewers 330 are able to see the content shared by the tournament commentator 320. An example of the content shared by the tournament commentator 320 is illustrated in FIG. 4. This includes video replays 410, a feed of the Streamer 420, tournament information 430, and current leaderboard Status 440.

The second end type of user is the tournament commentator 320 or "streamer" who uses the ESports management Server 310 to deliver a high quality and engaging video feed to their audience. The streamer is able to capture video from all tournament participants; preview the captured video to privately view the replay of a player without sharing that video to the live stream; interact with a video queue interface to view, select, and play Videos or clips; and receive suggestions for automatically portioned and assembled video broken into highlight reels and/or key segments with game analytics.

ESports management Server 310 in combination with peer-toumament module 240, automatically captures and records video replay of all players 210, who participate in a tournament. Through the eSports Management System 310, a streamer 320 hosting a tournament has access to a list of all competitors or players 210, in the event that he or she is hosting and each player's 210, associated video capture. For each player 210, the streamer 320 has at least two actions that they can take using the captured video replay. They can preview the captured video in which the streamer 320 privately views the captured video of a player 210, without sharing that video to the live stream. This tool gives the streamer 320 flexibility to review plays before having to speak about them, seek out a specific moment of the replay that he or she wants to show, or otherwise preview the video before showing it to his or her audience. The streamer 320 can also add the selected video to a video queue, which specifies the next video portions to be streamed on the live broadcast stream.

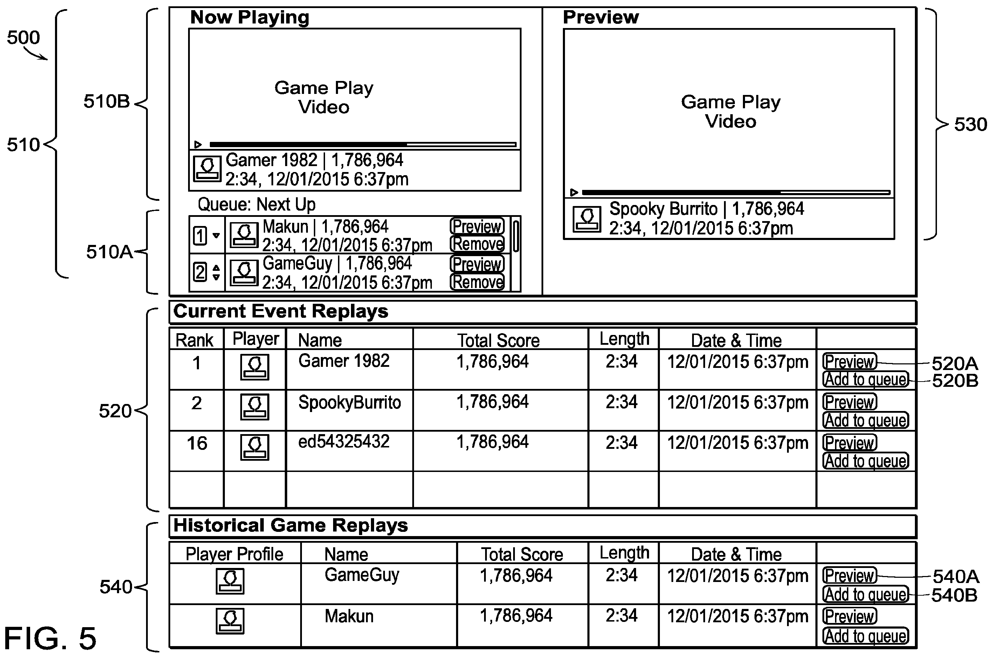

FIG. 5 is a user interface illustrating a video control panel 500. The video control panel 500 includes a video queue interface 510 for Streamers 320 to view, select, and play Videos or clips. The video queue interface 510 allows the streamer to interact with and control what is being broadcasted to his or her stream. The video queue interface 510 includes two components: a now playing stream 510B, and a queue 510A.

The now playing stream 510B shows the streamer 320 what replay is being currently broadcasted the live video stream or feed). This is a persistent space that allows the streamer 320 to monitor what they are currently sharing even while using the window to preview streams or adjust replays in a way that will not be shared with the audience.

The queue 510A gives the Streamer 320 the capability to control the order that video portions or replays will be shown. The Streamer 320 may add individual video portions that they would like to show next, or change the order of what Videos are up next to be broadcasted. If the Streamer 320 chooses not to add anything to the queue, or if the queue becomes empty, the System can automatically stream video one of players using the across-match comparison, for example, by Streaming video of one of the top three performing players 210, the video of the player 210, having the greatest change in score over a one minute period of time, and the like.

Video control panel 500 includes a list of players 520 participating in tournament matches and for which video capture is available for broadcast to a wider audience. The list of players 520 includes options to preview 520A or add 520B their replay to the queue 510A. Video control panel 500 further includes a preview space 530 for viewing video and a list of historical game replays 540, with options to preview 540A or add 540B the historical game replay to the queue 510A.

ESports management Server 310, in combination with cross-match comparisons provided by across-match analytics Server 260, automatically breaks down video captured at the clients 220, into highlight reels and key segments, provides cross- match game analytics, and assembles a suggested broadcast for the Streamer 320. Thus eSports management System 310 enables automated functionality that acts as the streamer's 320 own "behind the scenes analyst team." This allows the Streamer 320 to work as a one person team and easily select the correct footage to play without having to take breaks from the live stream to look up past footage or stats. Automatic analytics and features include the rank ordering of replays that causes replays and player lists to appear in the queue 510A in order of their current rank in the tournament. This makes it easy to find the replay for any player based upon where they stand. Prior to watching the video the Streamer can know what level of player they are selecting and what the outcome of their game might be. In addition, replays can be ordered according to a custom comparison metric specified by the Streamer 320 and used by the across-match analytics Server 260 to compare player performance across separate matches.

Automated eSports management System 3 10 functionality includes providing a list of historical game replays. This can include links to historical replays of the same game Chat occurred during previous toumaments. This allows the Streamer 320 to bring up their favorite footage for easy reference. For example, the Streamer 320 can show the best game ever recorded, keep a reference of themselves playing the game, or use footage with a specifically interesting or relevant play or strategy.

Automated eSports management System 3 10 functionality includes providing notifications when there is a change within top of leaderboard. The Streamer 320 can be notified (in addition to the leaderboard changing) when there is a change in position amongst top players in a toumament.

Automated eSports management System 310 functionality can include highlighting of interesting segments. For example, the across-match analytics Server 260 can detect changes in game state where change in score per unit time is abnormally high or low. This makes it easy for Streamer 320 to sort to key plays where a player 210, secures victory or focus on areas where an otherwise good player struggled and may have lost the game.

Automated eSports management System 310 functionality can include providing live score Updates via segmenting gameplay into discrete blocks of time (sometimes referred to as "heartbeating"). Across-match analytics Server 260 detects player 210, scores or other game state Information as they play, not just at the end of the tournament. By using this Information, eSports management System 310 can post real-time score Updates to the Streamer 320 and indicate whether or not the player 210, is currently on track to beat their previous score or secure a top spot in the leaderboard.

As used herein, the term heartbeating refers to collection of snapshots of game state data relating to a specific game instance at regulär (or irregulär) intervals during the course of game play. The data included in the snapshots can advantageously be structured data and can be sent to the automated eSports management System Server for further analysis. The sending of the data from the snapshots collected during a game instance can be sent via a real-time or near real-time Streaming approach, or optionally in some examples using an asynchronous approach involving temporarily caching data at the client machine.

The aforementioned game state data snapshots can be collected at intervals such as several times a second or possibly longer or shorter. Collection of data at this granularity can allow comparisons across multiple game instances. In some examples, such as for example a tournament arrangement, a player competing against one or more other players can be started on a common game "seed" such that the initial game conditions for the multiple competing players are consistent. For a player vs. player example, the multiple players may progress through the game instance at a similar rate. In other examples in which the game does not include direct player vs. player competition, the tournament arrangement is still possible because each player competing in a player vs. game contest is compared to at least one other player experiencing similar starting game conditions. Using the game state data collected via the heartbeating process, the progress of the two or more players who are competing can be compared on a logically chosen progress scale. In some examples, the progress scale may be along a time axis, but in other examples, the progress scale can be distance through a virtual world, number of milestones or objectives encountered/defeated/achieved/etc., or the like.

Comparison of the game state data snapshots between players in a common game seed can allow predictive analytics to project when key moments in the game (e.g. events or the like that have a heightened impact on which of the two or more players ultimately "wins" the competition) to be identified (or at least predicted with some degree of confidence) before they actually happen. Such predictions can be enabled by analysis and comparison with historical for a larger set of players who have previously played the game or other games that are determined to be similar in structure. In effect, a machine learning algorithm, a regression or correlation analysis, a similarity analysis, or the like can be performed using historical data with comparisons to the "live" or nearly real time game state data snapshots for an in-progress game instance. The current game instance for one or more players can be mapped in this männer such that key States are correlated with those that have occurred in previously completed game instances to thereby enable predictions of likely outcomes, to identify upcoming parts of the game instance that are likely to be highly relevant to the outcome of a competition, and the like.

In an online video gaming System, unified leaderboard rankings can be determined based on the combination of virtual currency and real currency. In some implementations, the current subject matter provides a translation between cash and virtual currency matches on a shared leaderboard. Because players can play for both cash and virtual currency, there can be a unified leaderboard mixing players who compete in cash tournaments and players who do not compete in cash tournaments. Further, this direct translation can carry over to trophies awarded by the games or by the gaming network. A trophy can be a virtual good, in some cases non-transferable, which can be granted once per player account that achieves some milestone, such as number of matches won, cash games played, changing a setting, and the like.

In some online gaming networks or Systems, a player can compete in one or many games via participation in a leaderboard. This participation may be as an individual or as part of a temporary or permanent alliance of players (relating to the common "clan" structure). Some implementations of the current subject matter can be used to encourage players to participate in multiple network games. Players who do so can have an identity and a presumed alliance, which can provide increased revenue and greater retention across the games played.

**In** an example Implementation of an online gaming System, players in the online video gaming competition System share a common cash balance across all games that are cash enabled and these balances are treated similarly in terms of value and leadership across a multitude of games. In addition, the example System can offer a "practice" virtual currency, which are specific to each game, and which may or may not be associated with the game's own virtual currency. The System can grant virtual prizes for participation in tournament activities across all games and awards a variety of real-life prizes in a sweepstakes-style System of prizing.

The current subject matter can include a System of advanced leaderboards; leagues; trophies; and prizing that together provide the network. The System can include a tool that provides a common leaderboard structure, which: provides logic for challenge Provision of players in league or non-league circumstances; contemplates and provides rules around surfacing available players to challenge; provides a translation between cash and virtual currency matches on a shared leaderboard; and provides for prizes, including medals (the primary measure of success on the leaderboards), trophies/achievements on both a game and a system-wide basis, non-cash related prizes on the platform layer, and any in-game rewards or prizes assigned on an ad-hoc basis.

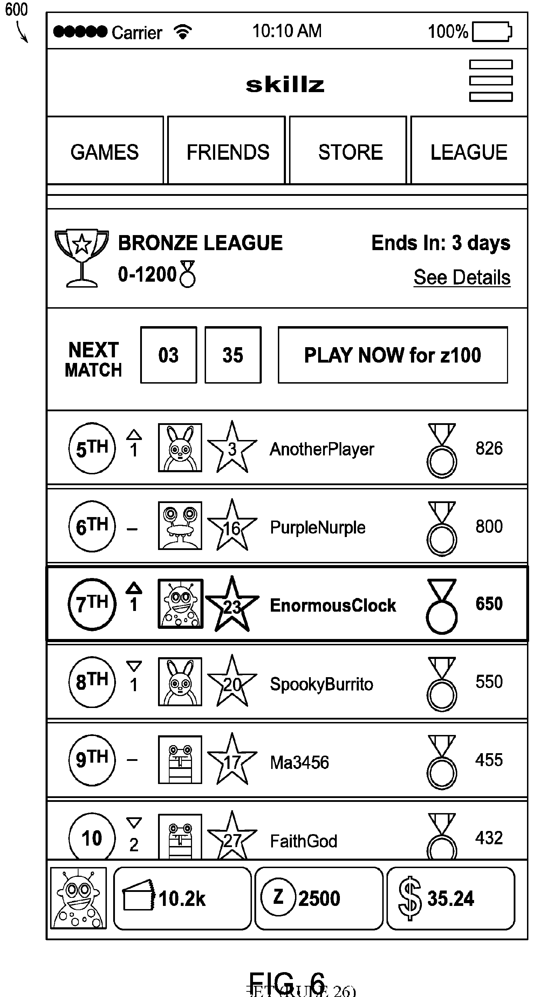

FIG. 6 is an Illustration of an example unified leaderboard. The example unified leader board shows a common leaderboard structure that provides a translation between cash and virtual currency matches on a shared leaderboard. This includes a common medal count (right) and ranking (left) on a system-wide basis.

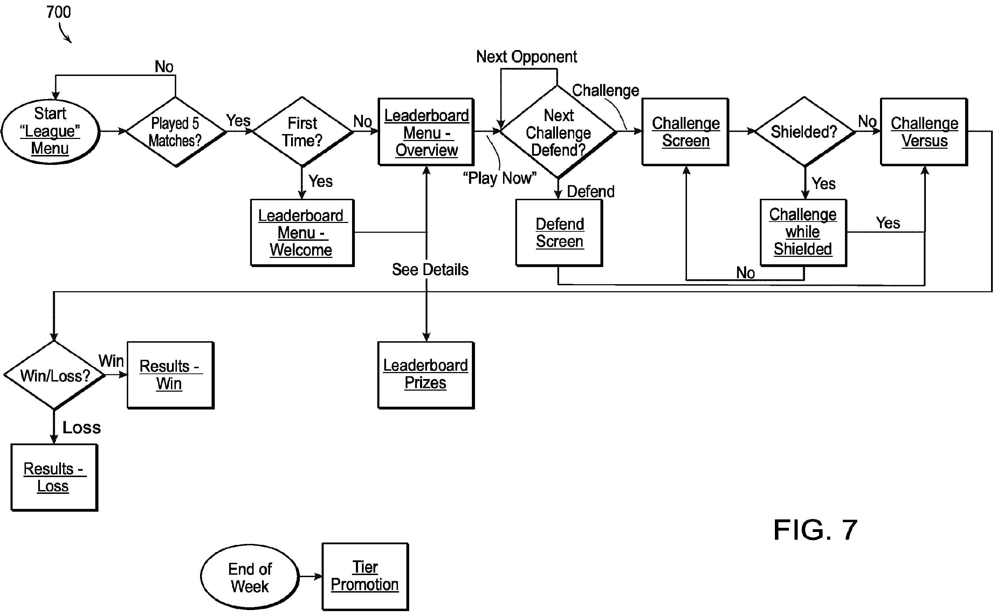

The current subject matter can provide logic for challenge Provision of players in league or non-league circumstances. For example, leaderboards exist across many games and in some multi-game Systems (notably Xbox Live gamerscore and related concepts). Using the current subject matter, however, players play across multiple games of every sort and size, and that players are typically competing for: cash outcome on the match; virtual currency outcome on the match, whether System-level and/or a game's individual currency (or currencies); and prizes, which may or may not be cash, virtual currency or even a real-world item. FIG. 7 is a process flow diagram illustrating an example logic flow for defending, challenging, and viewing the leaderboard in league or non-league circumstances. Players can select "play now" from a menu, which will challenge the next Opponent. Similarly, a challenged player can defend the challenge. The outcome results in a change in the leaderboard Standings.

The current subject matter can explicitly allow players to compete against each other for both virtual currency and cash, with a valuation currently pegged at a unit of virtual currency being I/100th of the value of a dollar for purposes of determining the number of medals awarded for the winner of a match. In some implementations, the combination of virtual currency and real currency is used to implement a unified leaderboard.

These challenges may occur as a random 1 vs. 1 or team vs. team or clan vs. clan match, but they also occur within a league structure, where players are required to challenge other members of their league and this combined method is used to award medals.

Further, the current subject matter makes the medal awards in a way that is consistent across different games. Thus, winning a match for the same stakes where the players have the same medal counts in different games (*e.g.,* 500 medals) can pay exactly the same number of medals. In addition, virtual currency matches can also be pegged to a Standard ratio (currently, virtual currency worth $.01 would be assigned the value of unit of virtual currency), whether the currency is actually available for purchase for cash or not.

In some implementations, the current subject matter contemplates and provides rules around surfacing available players to challenge. The example System can surfaces suggested matches based on a combination of cash and virtual currency.

In some implementations, the current subject matter provides a translation between cash and virtual currency matches on a shared leaderboard. Because players can play for both cash and virtual currency, there can be a unified leaderboard mixing players who compete in cash tournaments and players who do not compete in cash toumaments. Further, this direct translation can carry over to trophies awarded by the games or by the gaming network. A trophy can be a virtual good, in some cases non-transferable, which can be granted once per player account that achieves some milestone, such as number of matches won, cash games played, changing a setting, and the like.

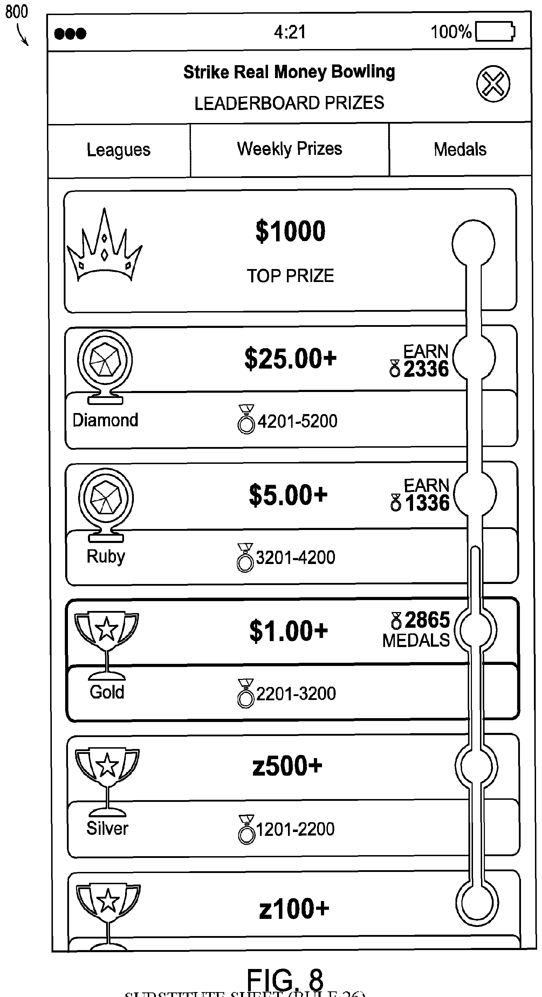

In some implementations, the current subject matter provides for prizes, including medals, which can be a primary measure of success on the leaderboards, trophies/achievements on both a game and a network-wide basis, non-cash prizes on the platform layer, and any in-game rewards or prizes assigned on an ad-hoc basis. For example, FIG. 8 is an illustrating of an example leaderboard prize page.

As described, some implementations of the current subject matter can offer multiple rewards to the victor(s), on both a game by game and a network-wide System basis. These awards include medals, which are the current measure of a player' s rank in any associated leaderboard (global, local, clan, team, friends, and the like) and are properly seen as a measure of skill. Further, the award of trophies/achievements can contain a large set of items unique to the network, where many of these will reward Standard actions, including cross-game or network actions. A simple example of the latter is to change one's profile avatar for a particular trophy/achievement, where the action contemplated is only partially relevant to the game in question.

Although a few variations have been described in detail above, other modifications or additions are possible. For example, although some examples have been described with reference to asynchronous single player games, the current subject matter can apply to any toumament where there are separate matches occurring. These separate matches can be multiplayer matches. For example, the current subject matter can apply to an online tournament of digital tennis in which two players compete directly sharing the same game state but their performance is compared to another match having two different and competing players.

One or more aspects or features of the subject matter described herein can be realized in digital electronic circuitry, integrated circuitry, specially designed application specific integrated circuits (ASICs), field programmable gate arrays (FPGAs) Computer hardware, firmware, Software, and/or combinations thereof. These various aspects or features can include implementation in one or more Computer programs that are executable and/or interpretable on a programmable System including at least one programmable processor, which can be special or general purpose, coupled to receive data and instructions from, and to transmit data and instructions to, a storage System, at least one input device, and at least one Output device. The programmable System or computing System may include clients and Servers. A dient and Server are generally remote from each other and typically interact through a communication network. The relationship of dient and Server arises by virtue of Computer programs running on the respective Computers and having a client-server relationship to each other.

These Computer programs, which can also be referred to as programs, Software, Software applications, applications, components, or code, include machine instructions for a programmable processor, and can be implemented in a high-level procedural language, an object-oriented programming language, a functional programming language, a logical programming language, and/or in assembly/machine language. As used herein, the term "machine-readable medium" refers to any Computer program product, apparatus and/or device, such as for example magnetic discs, optical disks, memory, and Programmable Logic Devices (PLD5), used to provide machine instructions and/or data to a programmable processor, including a machine-readable medium that receives machine instructions as a machine-readable signal. The term "machine-readable signal" refers to any signal used to provide machine instructions and/or data to a programmable processor. The machine-readable medium can störe such machine instructions non-transitorily, such as for example as would a non-transient solid-state memory or a magnetic hard drive or any equivalent storage medium. The machine-readable medium can alternatively or additionally store such machine instructions in a transient manner, such as for example as would a processor cache or other random access memory associated with one or more physical processor cores.

To provide for interaction with a user, one or more aspects or features of the subject matter described herein can be implemented on a Computer having a display device, such as for example a cathode ray tube (CRT) or a liquid crystal display (LCD) or a light emitting diode (LED) monitor for displaying Information to the user and a keyboard and a pointing device, such as for example a mouse or a trackball, by which the user may provide input to the Computer. Other kinds of devices can be used to provide for interaction with a user as well. For example, feedback provided to the user can be any form of sensory feedback, such as for example visual feedback, auditory feedback, or tactile feedback; and input from the user may be received in any form, including, but not limited to, acoustic, speech, or tactile input. Other possible input devices include, but are not limited to, touch screens or other touch-sensitive devices such as single or multi-point resistive or capacitive trackpads, voice recognition hardware and Software, optical Scanners, optical pointers, digital image capture devices and associated interpretation Software, and the like.

In the descriptions above and in the Claims, phrases such as "at least one of or "one or more of may occur followed by a conjunctive list of elements or features. The term "and/or" may also occur in a list of two or more elements or features. Unless otherwise implicitly or explicitly contradicted by the context in which it is used, such a phrase is intended to mean any of the listed elements or features individually or any of the recited elements or features in combination with any of the other recited elements or features. For example, the phrases "at least one of A and B;" "one or more of A and B;" and "A and/or B" are each intended to mean "A alone, B alone, or A and B together." A similar Interpretation is also intended for lists including three or more items. For example, the phrases "at least one of A, B, and C;" "one or more of A, B, and C;" and "A, B, and/or C" are each intended to mean "A alone, B alone, C alone, A and B together, A and C together, B and C together, or A and B and C together."

The subject matter described herein can be embodied in Systems, apparatus, methods, and/or articles depending on the desired configuration. The implementations set forth in the foregoing description do not represent all implementations consistent with the subject matter described herein. Instead, they are merely some examples consistent with aspects related to the described subject matter. Although a few variations have been described in detail above, other modifications or additions are possible. In particular, further features and/or variations can be provided in addition to those set forth herein. For example, the implementations described above can be directed to various combinations and subcombinations of the disclosed features and/or combinations and subcombinations of several further features disclosed above. In addition, the logic flows depicted in the accompanying figures and/or described herein do not necessarily require the particular order shown, or sequential order, to achieve desirable results.

## Claims

1. A computer-implemented method (100) comprising:
receiving (110) first game state data captured from a first gaming application (230i) executing on a first client (220i) and characterizing an in-game parameter of a first match of a peer-to-peer digital gaming tournament, the first game state data captured by a first peer-tournament module integrated into the first gaming application (230i) and in operable communication with an across-match analytics server (260) configured to implement the peer-to-peer digital gaming tournament over a network;
receiving a first video capture from the first client (220i) of a display of the first match;
receiving (120) second game state data captured from a second gaming application (230i) executing on a second client (220i) and characterizing an in-game parameter of a second match of the peer-to-peer digital gaming tournament, the second game state data captured by a second peer-tournament module integrated into the second gaming application (230i) and in operable communication with the across-match analytics server (260);
receiving a second video capture from the second client (220i) of a display of the second match;
comparing (130) the first game state data and the second game state data using a predefined comparison rule by computing a measure of a performance of a first player in the first match and a measure of a performance of a second player in the second match;
selecting, based on the comparison, a portion of the first video capture or a portion of the second video capture; and
streaming at least one of the portion of the first video capture or the portion of the second video capture to at least one viewing client;
wherein the receiving, comparing, selecting, and streaming are performed by at least one data processor forming part of at least one computing system,
wherein game play of the first match and of the second match is segmented into discrete blocks of time,
wherein the first game state data comprises one or more first snapshots of game state data relating to a first specific game instance corresponding to the first match, the one or more first snapshots being collected at regular or irregular intervals during the game play of the first match, each of the one or more first snapshots corresponding to a respective one of the discrete blocks of time of the first match,
wherein the second game state data comprises one or more second snapshots of game state data relating to a second specific game instance corresponding to the second match, the one or more second snapshots being collected at regular or irregular intervals during the game play of the second match, each of the one or more second snapshots corresponding to a respective one of the discrete blocks of time of the second match, and
wherein the one or more first snapshots collected at the first client (220i) and the one or more second snapshots collected at the second client (220i) are temporarily cached at the respective client and transmitted asynchronously to the across-match analytics server (260) for comparison across multiple game instances.

2. The method (100) of claim 1 wherein the predefined comparison rule defines the measure of the performance of the first player and the measure of the performance of the second player.

3. The method (100) of claim 1 further comprising:
comparing the first game state data and the second game state data periodically and at multiple time points.

4. The method (100) of claim 1, wherein the first match and the second match begin at different times, the method further comprising:
registering in time the first game state data to the second game state data, wherein time is referenced to a game time, an absolute time, or a tournament time.

5. The method (100) of claim 1 wherein the first game state data characterizes a value of one or more in-game data objects at two or more points of time during the first match.

6. The method (100) of claim 1 wherein the first client receives game data from a third party game server (250), the game data for implementing the first match.

7. The method (100) of claim 1 wherein the first match and the second match are separate instances of a digital video game.

8. The method (100) of claim 7 wherein the digital video game is an asynchronous game.

9. The method (100) of claim 7 wherein the digital video game is a single player asynchronous game.

10. The method (100) of claim 1 wherein the first match and the second match are played concurrently.

11. The method (100) of claim 1 wherein the predefined comparison rule is previously defined by a user.

12. The method (100) of claim 1 wherein the comparing includes identifying at least one period of time during the first match or the second match in which an event occurs, and/or wherein the receiving of the first game state data occurs during the first match, and/or wherein the receiving of the first game state data occurs periodically during the first match, and/or wherein the first game state data includes: instantaneous score, change in score over a predefined period of time, character position, character health, and/or wherein the first match and the second match are initiated with a common random number seed to provide common starting conditions, and/or wherein the first client and the second client are separate computing systems in communication with a third party game server and an analytics server via a network, the third party game server separate from the analytics server, at least one of the receiving, comparing, and providing is performed by the analytics server.

13. A computer program product comprising a non-transitory machine-readable medium storing instructions that, when executed by one or more programmable processors, cause the one or more programmable processors to perform operations as described in any preceding claim.

14. A system comprising a machine-readable medium storing instructions and one or more programmable processors configured to perform operations as described in any of claims 1 to 12.

## Patentansprüche

1. Ein computerimplementiertes Verfahren (100), umfassend:
Empfangen (110) erster Spielzustandsdaten, die aus einer ersten Spieleanwendung (230i) erfasst werden, die auf einem ersten Client (220i) ausgeführt wird, und die einen spielinternen Parameter eines ersten Matches eines digitalen Peer-to-Peer-Spielturniers charakterisieren, wobei die ersten Spielzustandsdaten durch ein erstes Peer-Turniermodul erfasst werden, das in die erste Spieleanwendung (230i) integriert ist und in funktionsfähiger Kommunikation mit einem matchübergreifenden Analyseserver (260) steht, der dazu konfiguriert ist, das digitale Peer-to-Peer-Spielturnier über ein Netzwerk zu implementieren;
Empfangen einer ersten Videoaufnahme einer Anzeige des ersten Matches von dem ersten Client (220i);
Empfangen (120) zweiter Spielzustandsdaten, die aus einer zweiten Spieleanwendung (230i) erfasst werden, die auf einem zweiten Client (220i) ausgeführt wird, und die einen spielinternen Parameter eines zweiten Matches des digitalen Peer-to-Peer-Spielturniers charakterisieren, wobei die zweiten Spielzustandsdaten durch ein zweites Peer-Turniermodul erfasst werden, das in die zweite Spieleanwendung (230i) integriert ist und in funktionsfähiger Kommunikation mit dem matchübergreifenden Analyseserver (260) steht;
Empfangen einer zweiten Videoaufnahme einer Anzeige des zweiten Matches von dem zweiten Client (220i);
Vergleichen (130) der ersten Spielzustandsdaten und der zweiten Spielzustandsdaten unter Verwendung einer vordefinierten Vergleichsregel durch Berechnen eines Maßes für die Leistung eines ersten Spielers in dem ersten Match und eines Maßes für die Leistung eines zweiten Spielers in dem zweiten Match;
Auswählen, basierend auf dem Vergleich, eines Abschnitts der ersten Videoaufnahme oder eines Abschnitts der zweiten Videoaufnahme; und
Streamen des Abschnitts der ersten Videoaufnahme und/oder des Abschnitts der zweiten Videoaufnahme an mindestens einen Betrachtungsclient; wobei das Empfangen, Vergleichen, Auswählen und Streamen durch mindestens einen Datenprozessor durchgeführt werden, der Teil mindestens eines Rechensystems ist,
wobei der Spielablauf des ersten Matches und des zweiten Matches in diskrete Zeitblöcke segmentiert ist,
wobei die ersten Spielzustandsdaten eine oder mehrere erste Momentaufnahmen von Spielzustandsdaten umfassen, die sich auf eine erste spezifische Spielinstanz beziehen, die dem ersten Match entspricht, wobei die eine oder mehreren ersten Momentaufnahmen in regelmäßigen oder unregelmäßigen Abständen während des Spielablaufs des ersten Matches gesammelt werden, wobei jede der einen oder mehreren ersten Momentaufnahmen jeweils einem der diskreten Zeitblöcke des ersten Matches entspricht,
wobei die zweiten Spielzustandsdaten eine oder mehrere zweite Momentaufnahmen von Spielzustandsdaten umfassen, die sich auf eine zweite spezifische Spielinstanz beziehen, die dem zweiten Match entspricht, wobei die eine oder mehreren zweiten Momentaufnahmen in regelmäßigen oder unregelmäßigen Abständen während des Spielablaufs des zweiten Matches gesammelt werden, wobei jede der einen oder mehreren zweiten Momentaufnahmen jeweils einem der diskreten Zeitblöcke des zweiten Matches entspricht, und
wobei die eine oder mehreren ersten Momentaufnahmen, die an dem ersten Client (220i) gesammelt werden, und die eine oder mehreren zweiten Momentaufnahmen, die an dem zweiten Client (220i) gesammelt werden, auf dem jeweiligen Client vorübergehend zwischengespeichert und zum Vergleich über mehrere Spielinstanzen hinweg asynchron an den matchübergreifenden Analyseserver (260) gesendet werden.

2. Das Verfahren (100) nach Anspruch 1, wobei die vordefinierte Vergleichsregel das Maß für die Leistung des ersten Spielers und das Maß für die Leistung des zweiten Spielers definiert.

3. Das Verfahren (100) nach Anspruch 1, ferner umfassend:
periodisches Vergleichen der ersten Spielzustandsdaten und der zweiten Spielzustandsdaten zu mehreren Zeitpunkten.

4. Das Verfahren (100) nach Anspruch 1, wobei das erste Match und das zweite Match zu unterschiedlichen Zeitpunkten beginnen, wobei das Verfahren ferner umfasst:
zeitliches Abgleichen der ersten Spielzustandsdaten mit den zweiten Spielzustandsdaten, wobei sich die Zeit auf eine Spielzeit, eine absolute Zeit oder eine Turnierzeit bezieht.

5. Das Verfahren (100) nach Anspruch 1, wobei die ersten Spielzustandsdaten einen Wert eines oder mehrerer spielinterner Datenobjekte zu zwei oder mehr Zeitpunkten während des ersten Matches charakterisieren.

6. Das Verfahren (100) nach Anspruch 1, wobei der erste Client Spieldaten von einem Spielserver eines Dritten (250) empfängt, wobei die Spieldaten zur Implementierung des ersten Matches dienen.

7. Das Verfahren (100) nach Anspruch 1, wobei das erste Match und das zweite Match getrennte Instanzen eines digitalen Videospiels sind.

8. Das Verfahren (100) nach Anspruch 7, wobei das digitale Videospiel ein asynchrones Spiel ist.

9. Das Verfahren (100) nach Anspruch 7, wobei das digitale Videospiel ein asynchrones Einzelspielerspiel ist.

10. Das Verfahren (100) nach Anspruch 1, wobei das erste Match und das zweite Match gleichzeitig gespielt werden.

11. Das Verfahren (100) nach Anspruch 1, wobei die vordefinierte Vergleichsregel zuvor von einem Benutzer definiert worden ist.

12. Das Verfahren (100) nach Anspruch 1, wobei das Vergleichen ein Identifizieren mindestens einer Zeitspanne während des ersten Matches oder des zweiten Matches umfasst, in der ein Ereignis auftritt, und/oder wobei das Empfangen der ersten Spielzustandsdaten während des ersten Matches erfolgt, und/oder wobei das Empfangen der ersten Spielzustandsdaten periodisch während des ersten Matches erfolgt, und/oder wobei die ersten Spielzustandsdaten Folgendes umfassen: momentanen Punktestand, Änderung des Punktestands über eine vordefinierte Zeitspanne, Charakterposition, Charaktergesundheit, und/oder wobei das erste Match und das zweite Match mit einem gemeinsamen Zufallszahlen-Startwert initiiert werden, um gemeinsame Ausgangsbedingungen bereitzustellen, und/oder wobei der erste Client und der zweite Client getrennte Rechensysteme sind, die über ein Netzwerk mit einem Spielserver eines Dritten und einem Analyseserver in Kommunikation stehen, wobei der Spielserver eines Dritten von dem Analyseserver getrennt ist, wobei mindestens einer der Vorgänge des Empfangens, Vergleichens und Bereitstellens durch den Analyseserver durchgeführt wird.

13. Ein Computerprogrammprodukt, umfassend ein nichttransitorisches maschinenlesbares Medium, das Anweisungen speichert, die, wenn sie von einem oder mehreren programmierbaren Prozessoren ausgeführt werden, den einen oder die mehreren programmierbaren Prozessoren dazu veranlassen, Operationen gemäß einem der vorhergehenden Ansprüche auszuführen.

14. Ein System, umfassend ein maschinenlesbares Medium, das Anweisungen speichert, und einen oder mehrere programmierbare Prozessoren, die dazu konfiguriert sind, Operationen gemäß einem der Ansprüche 1 bis 12 auszuführen.

## Revendications

1. Un procédé (100) mis en œuvre par ordinateur comprenant :
la réception (110) de premières données d'état de jeu capturées à partir d'une première application de jeu (230i) s'exécutant sur un premier client (220i) et caractérisant un paramètre en cours de jeu d'un premier match d'un tournoi de jeux numériques entre pairs, les premières données d'état de jeu étant capturées par un premier module de tournoi entre pairs intégré dans la première application de jeu (230i) et en communication fonctionnelle avec un serveur d'analyse intermatchs (260) configuré pour mettre en œuvre le tournoi de jeux numériques entre pairs sur un réseau ;
la réception, en provenance du premier client (220i), d'une première capture vidéo d'un affichage du premier match ;
la réception (120) de deuxièmes données d'état de jeu capturées à partir d'une deuxième application de jeu (230i) s'exécutant sur un deuxième client (220i) et caractérisant un paramètre en cours de jeu d'un deuxième match du tournoi de jeux numériques entre pairs, les deuxièmes données d'état de jeu étant capturées par un deuxième module de tournoi entre pairs intégré dans la deuxième application de jeu (230i) et en communication fonctionnelle avec le serveur d'analyse intermatchs (260) ;
la réception, en provenance du deuxième client (220i), d'une deuxième capture vidéo d'un affichage du deuxième match ;
la comparaison (130) des premières données d'état de jeu et des deuxièmes données d'état de jeu au moyen d'une règle de comparaison prédéfinie en calculant une mesure d'une performance d'un premier joueur dans le premier match et une mesure d'une performance d'un deuxième joueur dans le deuxième match ;
la sélection, sur la base de la comparaison, d'une portion de la première capture vidéo ou d'une portion de la deuxième capture vidéo ; et
la diffusion en continu, vers au moins un client de visualisation, d'au moins une portion parmi la portion de la première capture vidéo et la portion de la deuxième capture vidéo ;
dans lequel la réception, la comparaison, la sélection et la diffusion en continu sont effectuées par au moins un processeur de données faisant partie d'au moins un système informatique,
dans lequel le déroulement du jeu au cours du premier match et du deuxième match est segmenté en blocs de temps discrets,
dans lequel les premières données d'état de jeu comprennent un ou plusieurs premiers instantanés de données d'état de jeu relatifs à une première instance de jeu spécifique correspondant au premier match, le ou les premiers instantanés étant collectés à intervalles réguliers ou irréguliers pendant le déroulement du jeu du premier match, chaque premier instantané correspondant à un bloc de temps discret respectif du premier match,
dans lequel les deuxièmes données d'état de jeu comprennent un ou plusieurs deuxièmes instantanés de données d'état de jeu relatifs à une deuxième instance de jeu spécifique correspondant au deuxième match, le ou les deuxièmes instantanés étant collectés à intervalles réguliers ou irréguliers pendant le déroulement du jeu du deuxième match, chaque deuxième instantané correspondant à un bloc de temps discret respectif du deuxième match, et
dans lequel le ou les premiers instantanés collectés au niveau du premier client (220i) et le ou les deuxièmes instantanés collectés au niveau du deuxième client (220i) sont temporairement mis en mémoire cache au niveau du client respectif et transmis de manière asynchrone au serveur d'analyse intermatchs (260) pour une comparaison entre plusieurs instances de jeu.

2. Le procédé (100) selon la revendication 1, dans lequel la règle de comparaison prédéfinie définit la mesure de la performance du premier joueur et la mesure de la performance du deuxième joueur.

3. Le procédé (100) selon la revendication 1, comprenant en outre :
la comparaison des premières données d'état de jeu et des deuxièmes données d'état de jeu de manière périodique et à de multiples instants.

4. Le procédé (100) selon la revendication 1, dans lequel le premier match et le deuxième match commencent à des moments différents, le procédé comprenant en outre :
le recalage temporel des premières données d'état de jeu par rapport aux deuxièmes données d'état de jeu, dans lequel le temps est référencé à un temps de jeu, à un temps absolu ou à un temps de tournoi.

5. Le procédé (100) selon la revendication 1, dans lequel les premières données d'état de jeu caractérisent une valeur d'un ou plusieurs objets de données en cours de jeu à deux ou plusieurs instants pendant le premier match.

6. Le procédé (100) selon la revendication 1, dans lequel le premier client reçoit des données de jeu d'un serveur de jeu tiers (250), les données de jeu étant destinées à mettre en œuvre le premier match.

7. Le procédé (100) selon la revendication 1, dans lequel le premier match et le deuxième match sont des instances distinctes d'un jeu vidéo numérique.

8. Le procédé (100) selon la revendication 7, dans lequel le jeu vidéo numérique est un jeu asynchrone.

9. Le procédé (100) selon la revendication 7, dans lequel le jeu vidéo numérique est un jeu asynchrone à un seul joueur.

10. Le procédé (100) selon la revendication 1, dans lequel le premier match et le deuxième match sont joués simultanément.

11. Le procédé (100) selon la revendication 1, dans lequel la règle de comparaison prédéfinie est préalablement définie par un utilisateur.

12. Le procédé (100) selon la revendication 1, dans lequel la comparaison comprend l'identification d'au moins une période de temps au cours du premier match ou du deuxième match pendant laquelle un événement se produit, et/ou dans lequel la réception des premières données d'état de jeu a lieu pendant le premier match, et/ou dans lequel la réception des premières données d'état de jeu a lieu périodiquement pendant le premier match, et/ou dans lequel les premières données d'état de jeu comprennent : score instantané, variation de score sur une période de temps prédéfinie, position de personnage, état de santé de personnage, et/ou dans lequel le premier match et le deuxième match sont initialisés avec une graine commune de nombres aléatoires afin de fournir des conditions initiales communes, et/ou dans lequel le premier client et le deuxième client sont des systèmes informatiques distincts en communication avec un serveur de jeu tiers et un serveur d'analyse via un réseau, le serveur de jeu tiers étant distinct du serveur d'analyse, au moins l'une des opérations de réception, de comparaison et de fourniture étant effectuée par le serveur d'analyse.

13. Un produit-programme d'ordinateur comprenant un support non transitoire lisible par machine stockant des instructions qui, lorsqu'elles sont exécutées par un ou plusieurs processeurs programmables, amènent le ou les processeurs programmables à effectuer des opérations telles que décrites dans l'une quelconque des revendications précédentes.

14. Un système comprenant un support lisible par machine stockant des instructions et un ou plusieurs processeurs programmables configurés pour effectuer des opérations telles que décrites dans l'une quelconque des revendications 1 à 12.
